Europäisches Patentamt

European Patent Office

Office européen des brevets

(19)

(11) Numéro de publication : **0 577 512 A1**

## (12) DEMANDE DE BREVET EUROPEEN

(21) Numéro de dépôt : **93401700.5**

(22) Date de dépôt : **30.06.93**

(51) Int. Cl.⁵ : **G01N 3/32**, G01L 1/24

(30) Priorité : **30.06.92 FR 9208040**

(43) Date de publication de la demande :
**05.01.94 Bulletin 94/01**

(84) Etats contractants désignés :
**AT BE DE ES GB IT NL SE**

(71) Demandeur : **ASSOCIATION POUR LA RECHERCHE ET LE DEVELOPPEMENT DES METHODES ET PROCESSUS INDUSTRIELS (ARMINES)
60, Boulevard Saint-Michel
F-75272 Paris Cédex 06 (FR)**

(72) Inventeur : **van Ky, Dang
24 Avenue des Quatre-Chemins
F-92290 Chatenay-Malabry (FR)**
Inventeur : **Phong, Luong Minh
1 Rue du Bel Air
F-91270 Vigneux-sur-Seine (FR)**

(74) Mandataire : **Bruder, Michel et al
Cabinet Michel Bruder 10, rue de la Pépinière
F-75008 Paris (FR)**

(54) **Procédé et dispositif de détermination de la limité de fatigue d'un matériau.**

(57)    La présente invention concerne un procédé et un dispositif de détermination de la limite de fatigue d'au moins une zone (11) d'un élément solide (3) soumis à des sollicitations répétitives dans le temps. Suivant ce procédé et ce dispositif, l'on soumet successivement ledit élément solide (3), à plusieurs séries de (n) sollicitations sous différents niveaux de contraintes déterminés, l'on mesure la variation de température ($\Delta T$) subie par ladite zone (11) au cours de chacune des séries de (n) sollicitations, l'on exprime ladite variation de température ($\Delta T$) en fonction dudit niveau de contrainte auquel l'élément solide (3) a été soumis, et l'on détermine le niveau de contrainte, ou limite de fatigue, de ladite zone (11), correspondant à toute variation brusque de ladite variation de température ($\Delta T$).

FIG.1

EP 0 577 512 A1

La présente invention concerne un procédé et un dispositif de détermination de la limite de fatigue d'un matériau et/ou d'une structure mécanique.

On sait que la fatigue est définie comme étant un processus entraînant la rupture d'un corps solide soumis à des sollicitations cycliques ou répétées dans le temps, sous une contrainte inférieure à celle qui conduirait à une rupture après un seul cycle de charge. On désignera par "limite de fatigue" d'un élément solide la contrainte à partir de laquelle se produit la rupture, pour un nombre important de cycles, de l'ordre habituellement de $10^7$.

L'une des difficultés essentielles dans la conception de structures mécaniques nouvelles est la détermination de leur limite de fatigue. Cette détermination passe, habituellement, par deux étapes successives, à savoir une première étape consistant à déterminer la limite de fatigue du matériau constituant la structure, et une seconde étape consistant, à partir de la limite de fatigue du matériau, à déterminer la limite de fatigue de la structure.

Les méthodes de détermination de la limite de fatigue d'un matériau consistent ainsi à soumettre des éprouvettes, réalisées dans ce matériau, à un nombre donné de sollicitations, respectivement sous une série de contraintes déterminées croissantes, jusqu'à la rupture de l'éprouvette.

Un premier inconvénient des méthodes de ce type est qu'elles nécessitent, en raison du nombre important de sollicitations auxquelles l'éprouvette doit être soumise, une durée de mise en oeuvre particulièrement importante, de l'ordre du mois.

Un second inconvénient de ces méthodes est qu'elles nécessitent, un nombre important d'éprouvettes, variant en fonction de la précision de la mesure que l'on souhaite obtenir, et qui est de l'ordre de quinze à cinquante.

De plus, il est parfois nécessaire de déterminer le critère de limite de fatigue pour des éprouvettes auxquelles sont appliquées des contraintes multiaxiales, ce qui accroît encore la difficulté et le nombre d'essais et d'éprouvettes nécessaires à cette détermination, si bien que la conception d'un produit nouveau soumis à des sollicitations se reproduisant dans le temps est particulièrement longue et onéreuse.

On rencontre ensuite des problèmes du même type lorsque l'on veut déterminer la limite de fatigue d'une structure mécanique entière. Suivant la complexité de celle-ci il est, la plupart du temps, particulièrement difficile, voire même impossible, notamment pour des problèmes de coût, de procéder de la même façon qu'avec des éprouvettes.

La présente invention a pour but de proposer un procédé et un dispositif permettant de déterminer la limite de fatigue d'un matériau, et/ou d'une structure, en un temps particulièrement court, de l'ordre de quelques heures, ne nécessitant pour ce faire qu'une seule éprouvette ou une seule et unique structure.

La présente invention a ainsi pour objet un procédé de détermination de la limite de fatigue d'au moins une zone d'un élément solide soumis à des sollicitations répétitives dans le temps, caractérisé en ce qu'il comporte les étapes consistant :

- à soumettre successivement ledit élément solide à plusieurs séries de sollicitations répétitives dans le temps, respectivement sous différents niveaux de contraintes déterminés,
- à mesurer, au moins en début et en fin de chaque série de sollicitations, la variation de température subie par ladite zone, au cours de ladite série de sollicitations,
- à exprimer ladite variation de température en fonction dudit niveau de contrainte auquel l'élément solide a été soumis, et
- à déterminer le niveau de contrainte, ou limite de fatigue, de ladite zone, correspondant à toute variation brusque de ladite variation de température.

La présente invention a également pour objet un dispositif de détermination de la limite de fatigue d'au moins une zone d'un élément solide soumis à des sollicitations répétitives dans le temps, respectivement sous différents niveaux de contraintes déterminés, caractérisé en ce qu'il comprend :

- des moyens de mesure de la variation de température subie par ladite zone de l'élément solide, au cours de chacune des séries de sollicitations,
- des moyens pour établir la variation de la variation de température subie par ladite zone de l'élément solide en fonction des différents niveaux de contraintes appliqués audit élément solide, et
- des moyens de détermination du niveau de contrainte à partir duquel se produit une variation brusque de ladite variation de température.

Dans un mode de mise en oeuvre de l'invention, on effectue une mesure de la variation de température subie par les différentes zones d'un même élément solide, soumis à des sollicitations répétitives dans le temps, qui peut d'ailleurs être constitué d'une structure mécanique complète. On peut ainsi utiliser, pour ce faire, tout moyen de mesure de température approprié et, notamment, des cristaux liquides que l'on répartit sur la surface externe de l'élément solide, et dont les changements de couleur renseignent sur les variations de température subies par les différentes zones de cet élément solide, ou encore une pluralité de thermocouples.

Dans une variante de mise en oeuvre particulièrement intéressante de l'invention, la mesure de la variation de température subie par les différentes zones de l'élément solide est effectuée par des moyens de thermographie infrarouge.

On sait que cette méthode de mesure particulière de la température prise par un corps consiste à enregistrer l'image transmise, dans l'infrarouge, par ce corps, à numériser le signal obtenu et à le reproduire, notamment sur un moniteur vidéo.

Suivant cette méthode on détermine, préalablement à chaque série de sollicitations, la température initiale de ladite zone de l'élément solide. On soumet ensuite celui-ci à sollicitations, sous des niveaux de contrainte déterminés, et l'on mesure de nouveau la température de ladite zone, puis on réalise ensuite une différence de ces deux valeurs de température pour en déduire la variation de température subie par la zone déterminée de l'élément solide.

Les moyens de mesure de température sont constitués d'une caméra infrarouge qui enregistre sur une bande magnétique, pour chaque série de sollicitations, une image infrarouge numérisée, d'une part, d'une image de référence, destinée à fournir la température initiale des différents points de l'élément solide à étudier et, d'autre part, des images infrarouges de ce dernier au cours des sollicitations auxquelles il est soumis, de façon à obtenir la température des différents points qui le constituent après chaque série de sollicitations.

Une image d'une éprouvette, ou d'une structure à étudier, est ainsi constituée d'une matrice M de pixels $P_{ij}$ occupant chacun, dans l'image, une position déterminée par son numéro de ligne $\underline{i}$ et son numéro de colonne j, à chacun de ces pixels étant affecté un nombre $L_{ij}$ représentatif de l'intensité du rayonnement émis, dans l'infrarouge, par le point de l'image auquel correspond le pixel $P_{ij}$.

La variation de température subie par l'ensemble de la structure est obtenue en soustrayant, pour chaque série de sollicitations, l'image de référence de l'image obtenue après les sollicitations. Pour ce faire on soustrait, pixel à pixel, le nombre $L_{rij}$ représentant l'intensité du rayonnement infrarouge associé à un pixel $P_{ij}$ de l'image de référence, du nombre $L_{ij}$ représentant l'intensité du rayonnement infrarouge associé à ce même pixel $P_{ij}$ après une série de sollicitations, de façon à obtenir, pour chaque série de sollicitations, une nouvelle matrice M' représentative de la variation de température subie par l'élément solide.

Pour améliorer la facilité de lecture, on attribue à différentes valeurs discrètes du nombre $L_{ij}$ une couleur arbitraire que l'on associe à une température déterminée. On est ainsi en mesure de représenter, sur un moniteur vidéo, la matrice M' des pixels représentant la variation de température subie par la structure au cours de chaque série de sollicitations.

La méthode de thermographie infrarouge est particulièrement bien adaptée à la mise en oeuvre du procédé suivant l'invention, puisqu'elle permet d'effectuer une mesure de température d'un élément solide, ou d'une zone d'un élément solide, sans qu'il soit nécessaire d'établir un contact avec ce dernier, et donc sans créer de perturbations susceptibles de dégrader la qualité de la mesure. Cette méthode permet, par ailleurs, de réaliser une mesure quasi-continue de la température de tous les points de l'élément solide.

La mesure de thermographie infrarouge associée au procédé suivant l'invention permet également de dresser une véritable "carte thermique" de la variation de température subie par l'élément solide au cours des sollicitations auxquelles il est soumis. La présente invention permet en conséquence, non seulement de déterminer la limite de fatigue d'une zone particulière d'une structure, mais également de déterminer quelle est la zone de cette structure qui subit la variation de température la plus importante et donc qui se comportera de la façon la plus critique. Une fois cette détermination faite, on peut ensuite déterminer la limite de fatigue de ce point faible de la structure ce qui permet, si celle-ci ne se situe pas à un niveau suffisamment élevé, de renforcer la structure en ce point faible.

On décrira ci-après, à titre d'exemple non limitatif, une forme d'exécution de la présente invention, en référence au dessin annexé sur lequel :

La figure 1 représente schématiquement un dispositif de détermination de la limite de fatigue suivant l'invention.

La figure 2 représente, sous forme schématique, une image de thermographie infrarouge, ou image de référence, d'une éprouvette destinée à être soumise à des contraintes périodiques de flexion rotative, prise avant sollicitations et constituant une "image de référence".

La figure 3 représente, sous forme schématique, une image de thermographie infrarouge, ou image de mesure, de l'éprouvette de la figure 2 après qu'elle ait subi 6000 sollicitations de flexion rotative sous une contrainte de 320 MPa.

La figure 4 représente, sous forme schématique, l'image résultat, obtenue par différence, pixel à pixel, des images des figures 2 et 3.

La figure 5 est une courbe représentant, en coordonnées logarithmiques, la variation de température subie par une éprouvette pour un nombre donné de sollicitations, en fonction de la contrainte de flexion rotative appliquée à cette éprouvette.

On décrira successivement ci-après le procédé de détermination de la limite de fatigue d'une éprouvette d'un matériau donné, respectivement suivant l'état antérieur de la technique et suivant l'invention.

On a utilisé, pour la mise en oeuvre de chacun des deux procédés, des éprouvettes de flexion rotative lisses de 6,74mm de diamètre et de 20 mm de longueur de partie utile, en acier brut de forge XC 55.

Suivant l'état antérieur de la technique, on soumet une série de dix-huit éprouvettes identiques, du type précité, à des efforts de flexion rotative, de fréquence égale à 100 Hz, sous des contraintes respectives variant de 370 MPa, à 600 MPa, par pas de 10 MPa. On soumet ainsi chacune des dix-huit éprouvettes à une procédure expérimentale de $10^7$ cycles de sollicitations, puis on détermine la valeur moyenne de la contrainte à partir de laquelle se produit la rupture. Les mesures réalisées sont consignées dans le tableau I ci-après où "R" indique la rupture et "NR" la non-rupture de l'éprouvette.

## TABLEAU I

| N° | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| $\sigma$ (MPa) | 420 | 430 | 420 | 410 | 420 | 410 | 400 | 390 | 380 | 390 | 400 | 410 | 400 | 390 | 400 | 390 | 380 | 370 |
| R/NR | NR | R | R | NR | R | R | R | R | NR | NR | NR | R | R | NR | R | R | R | NR |

Ces mesures permettent de définir une limite de fatigue égale à 399 MPa, ainsi que l'écart type de la mesure de limite de fatigue, soit 41MPa ce qui représente environ 10% de la mesure.

L'ordre de la grandeur de la durée nécessaire pour faire subir à chacune des dix-huit éprouvettes les $10^7$ cycles de la procédure expérimentale, à une fréquence de 100Hz, est d'environ vingt-huit heures, soit 0,7 semaine, si bien que le traitement des dix-huit éprouvettes nécessite dès lors environ trois mois de travail.

On décrira maintenant une forme préférentielle de mise en oeuvre du procédé et du dispositif suivant l'invention, dans laquelle les mesures de température nécessaires à la détermination de la variation de température subie par l'éprouvette ont été réalisées par des moyens de thermographie infrarouge.

Bien entendu, ces mesures pourraient également, suivant l'invention, être réalisées par tout autre moyen de mesure et, notamment, par des cristaux liquides que l'on déposerait en surface de l'élément solide, ou par une pluralité de thermocouples.

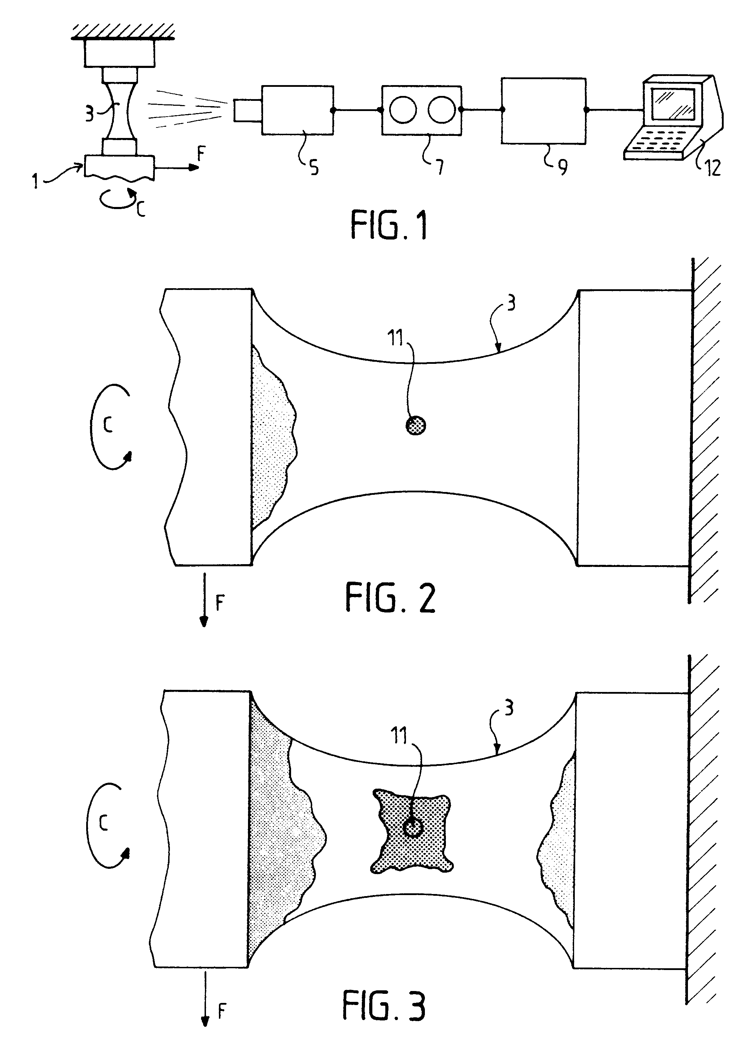

Le dispositif suivant l'invention, tel que représenté sur la figure 1, est constitué d'une machine de flexion rotative 1 sur laquelle est disposée une éprouvette 3 constituée du matériau à tester. La machine 1 et l'éprouvette 3 sont identiques à celles utilisées dans l'exemple de mise en oeuvre précédent.

Une caméra infrarouge 5, reliée à des moyens enregistreurs 7, est dirigée vers l'éprouvette 3. Les moyens enregistreurs 7 sont, dans le cas présent, constitués d'un magnétoscope. La sortie de ce dernier est reliée à des moyens interface 9, réalisant la numérisation des signaux qui lui sont envoyés par le magnétoscope 7. Les moyens interface 9 sont reliés à des moyens de mémorisation et de traitement du signal, tels que, par exemple, un ordinateur 12. Ce dernier est en mesure de traiter et de stocker en mémoire, sous forme numérique, différentes images thermographiques de l'éprouvette 3, ainsi que décrit ci-après.

Suivant l'invention, on prend tout d'abord une image thermographique de l'éprouvette 3 dans son état initial, c'est-à-dire avant qu'elle ne soit soumise à des sollicitations, cette image constituant l'image de référence de la première série de mesures. On soumet ensuite l'éprouvette 3 à 6000 sollicitations de flexion rotative, sous une contrainte de 320 MPa, puis on recommence la manipulation, avec la même éprouvette de façon à la soumettre à quinze autres séries de sollicitations sous des contraintes augmentant progressivement jusqu'à 600 MPa.

On enregistre, de façon permanente, sur la bande vidéo du magnétoscope 7, l'image thermographique de l'éprouvette 3 au cours des différentes séries de sollicitations auxquelles elle est soumise. On sélectionne ensuite, sur la bande vidéo, les 16 couples d'images prises respectivement en début et en fin de chacune des séries de 6000 sollicitations, et on les charge dans la mémoire de l'ordinateur 11.

On dispose ainsi de seize couples d'images qui sont respectivement constitués de seize couples de matrices de pixels $P_{ij}$, à savoir seize matrices de référence $M_{r1}$ ...,$M_{r16}$ et seize matrices de mesure $M_1$,...$M_{16}$ constituant l'image en fin de chacune des séries de sollicitations, ou image de mesure. A chaque pixel $P_{ij}$ de chacune de ces matrices est associée une valeur, $L_{ij}$ représentant l'intensité du rayonnement infrarouge émis par l'éprou-

4

vette 3.

On traite ensuite numériquement les seize matrices de mesure M1,...,$M_{16}$ pour leur retrancher respectivement, élément à élément, les seize matrices de référence $M_{r1}$,...,$M_{r16}$. On retranche ainsi de la valeur $L_{ij}$, associée à chaque élément de la matrice de pixel $P_{ij}$ de chacune des 16 images de mesure, la valeur $L_{rij}$ associée à chaque pixel $P_{ij}$ de l'image de référence.

On obtient ainsi 16 nouvelles matrices, dites matrices résultat M'$_1$,...M'$_{16}$ dont les éléments L'$_{ij}$ représentent la variation de température des différents points de l'éprouvette associés à ces pixels. On affecte ensuite, de façon arbitraire, une couleur à différentes valeurs entières de l'intensité du rayonnement infrarouge et l'on représente, par exemple sur un écran vidéo, pixel à pixel, la couleur correspondant à chaque pixel associé aux valeurs L'ij des matrices M'$_1$---M'$_{16}$ de façon à obtenir 16 images.

Ces images, reproduites de façon schématique sur les figures 2 à 4, représentent la variation de température subie par l'éprouvette 3 en chacun de ses points.

Cette possibilité est particulièrement intéressante dans le cas de structures où l'on ignore la zone de celle-ci, ou "zone critique", qui sera la plus sensible à la fatigue. La présente invention permet de dresser de véritables cartes thermographiques des variations de température subies par cette structure au cours des différentes séries de sollicitations auxquelles elle est soumise. Il est ainsi possible de déterminer, en s'aidant des couleurs arbitraires, la zone critique de cette structure.

Dans le cas particulier décrit de l'éprouvette 3, on vérifie que la zone critique 11 se situe au centre de celle-ci.

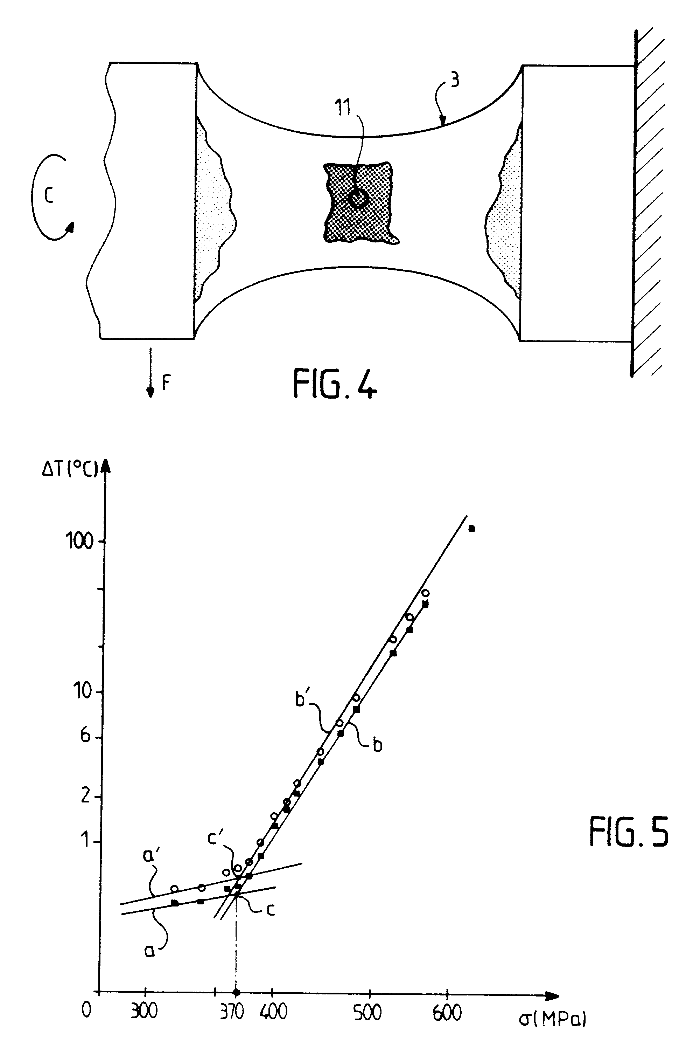

On peut, dès lors, représenter sur une courbe, par exemple en coordonnées logarithmiques, (figure 5) la variation de la variation de température $\Delta T$ subie par la zone centrale 11 de l'éprouvette 3 en fonction de la contrainte de flexion rotative à laquelle elle a été soumise au cours des seize séries de sollicitations.

On constate que cette courbe est constituée de deux droites de régression, à savoir une première droite a, de faible pente, suivie d'une seconde droite b de plus forte pente. Les deux droites de régression a et b se coupent en un point C d'abscisse égale à 370 MPa.

La demanderesse a établi que cette valeur représente la limite de fatigue de l'éprouvette 3.

On a effectué un autre ensemble de mesures en soumettant une éprouvette identique aux mêmes valeurs de contrainte, mais en effectuant, pour chacune d'elles, 3000 sollicitations au lieu des 6000 réalisées au cours du premier ensemble de mesures.

On a porté sur le graphique de la figure 5 les valeurs mesurées, et l'on obtient ainsi une seconde courbe constituée, comme la première, de deux droites de régression a' et b'. Ces deux droites a' et b' se rencontrent en un point C' d'abscisse égale à 370 MPa, soit la même valeur que précédemment. On constate ainsi que la valeur de la limite de fatigue obtenue n'augmente pas avec le nombre de sollicitations effectuées pour chaque série de sollicitations.

La présente invention présente ainsi, sur les procédés et dispositifs de l'état de la technique antérieure un certain nombre d'avantages :

- de première part elle permet tout d'abord de déterminer la zone critique d'une structure soumise à des sollicitations cycliques ou répétées dans le temps,
- de seconde part, elle permet de déterminer la limite de fatigue d'un élément solide, en réalisant un nombre relativement faible de sollicitations, ce qui évite de devoir réaliser les sollicitations jusqu'au point de rupture dudit élément solide, ce qui est particulièrement intéressant dans le cas de structures complexes qui, après essai, peuvent néanmoins être encore utilisées. Elle permet également de n'utiliser qu'un seul élément solide pour réaliser les différentes séries de sollicitations, ce qui est un élément propre à réduire le coût de mise en oeuvre du procédé,
- de troisième part le procédé suivant l'invention est particulièrement rapide. En effet avec une fréquence des sollicitations de l'ordre de 100 Hertz, on réalise les 6000 sollicitations fournissant un point de la courbe en un temps de 60 secondes ce qui, pour les seize points de la courbe, nécessite seulement une vingtaine de minutes. A cela s'ajoute, bien entendu, le temps nécessaire aux divers traitements numériques, si bien qu'en quelques heures on peut obtenir la limite de fatigue d'une éprouvette, ou d'une structure, alors que la même opération, suivant l'état de la technique, s'étend, ainsi que mentionné précédemment, sur une durée de plusieurs mois,
- de quatrième part, la mesure est beaucoup plus précise que celle de la technique antérieure,

Enfin, le présent procédé se prête particulièrement bien à un traitement entièrement automatisé, ce qui est également un facteur propre à réduire à la fois le coût et la durée de la détermination du paramètre de limite de fatigue.

**Revendications**

**1.-** Procédé de détermination de la limite de fatigue d'au moins une zone (11) d'un élément solide (3) soumis à des sollicitations répétitives dans le temps, caractérisé en ce qu'il comporte les étapes consistant :
- à soumettre successivement ledit élément solide (3), à plusieurs séries de (n) sollicitations répétitives dans le temps, respectivement sous différents niveaux de contraintes déterminés,
- à mesurer la variation de température ($\Delta T$) subie par ladite zone (11) au cours de chacune des séries de sollicitations,
- à exprimer ladite variation de température ($\Delta T$) en fonction dudit niveau de contrainte auquel l'élément solide (3) a été soumis, et
- à déterminer le niveau de contrainte, ou limite de fatigue, de ladite zone (11), correspondant à toute variation brusque de ladite variation de température ($\Delta T$).

**2.-** Procédé suivant la revendication 1 caractérisé en ce qu'on réalise une mesure de ladite variation de température ($\Delta T$) simultanément sur un ensemble de zones de l'élément solide (3).

**3.-** Procédé suivant l'une des revendications 1 et 2 caractérisé en ce que l'on réalise la mesure de variation de température ($\Delta T$) par des mesures de température successives, à savoir avant et après sollicitations, ces mesures de température étant réalisées en captant le rayonnement émis, dans l'infrarouge, par l'élément solide (3).

**4.-** Procédé suivant la revendication 3 caractérisé en ce qu'on réalise :
- de première part, une image numérisée, dite image de référence, de l'élément solide (3), avant qu'il ne soit soumis à chacune des (n) séries de sollicitations, cette image de référence étant constituée d'une matrice ($M_{r1},...M_{rn}$) de pixels ($P_{ij}$), chacun de ces pixels ayant une valeur numérique associée ($L_{rij}$) représentative de l'intensité du rayonnement infrarouge émis par le point correspondant de l'élément solide,
- de seconde part une image numérisée, dite image de mesure, de l'élément solide à la fin de chacune des (n) séries de sollicitations, cette image étant constituée d'une matrice ($M_1,---M_n$) de pixels ($P_{ij}$), chacun de ces pixels ayant une valeur numérique associée ($L_{ij}$) représentative de l'intensité du rayonnement infrarouge émis par le point correspondant de l'élément solide,
- de troisième part on établit une nouvelle série de (n) images numérisées, dites images résultat, constituées d'une matrice ($M'_1...M'_n$) de pixels ($P_{ij}$), chacun des pixels des images résultat ayant une valeur numérique associée ($L'_{ij}$) égale à la valeur numérique associée ($L_{ij}$) de la matrice de l'image de mesure de laquelle on a retranché la valeur numérique associée ($L_{rij}$) de la matrice de l'image de référence.

**5.-** Procédé suivant la revendication 4 caractérisé en ce que, pour une zone (11) donnée, correspondant à un pixel ou à un ensemble de pixels adjacents, on établit la variation de la variation de température ($\Delta T$) subie par la zone (11) en fonction de la contrainte ($\sigma$) appliquée à l'élément solide (3), la limite de fatigue étant déterminée comme étant la contrainte à laquelle se produit un brusque accroissement de la variation de la variation de température ($\Delta T$).

**6.-** Procédé suivant l'une quelconque des revendications précédentes caractérisé en ce qu'on choisit la zone (11) pour laquelle on détermine la limite de fatigue, comme étant la zone ayant subi, au cours des (n) séries de sollicitations, la variation de température ($\Delta T$) la plus importante.

**7.-** Dispositif de détermination de la limite de fatigue d'au moins une zone (11) d'un élément solide (3) soumis à (n) séries de sollicitations répétitives dans le temps, respectivement sous différents niveaux de contraintes déterminés, caractérisé en ce qu'il comprend :
- des moyens de mesure (5,7,9) de la variation de température ($\Delta T$) subie par ladite zone (11) de l'élément solide (3), au cours de chacune des (n) séries de sollicitations,
- des moyens (12) pour établir la variation de la variation de température ($\Delta T$) subie par ladite zone (11) de l'élément solide (3) en fonction des différents niveaux de contraintes ($\sigma$) appliqués audit élément solide (3), et
- des moyens de détermination du niveau de contrainte à partir duquel se produit une variation brusque de ladite variation de température ($\Delta T$).

**8.-** Dispositif suivant la revendication 7 caractérisé en ce que les moyens de mesure de la variation de température ($\Delta T$) sont constitués de moyens de thermographie infrarouge aptes à enregistrer une image infrarouge d'au moins ladite zone (11) de l'élément solide (3), au moins en début et en fin de chacune des (n) séries de sollicitations, ce dispositif comprenant :
- des moyens de numérisation (9) des images obtenues afin de transformer chacune de celles-ci en une pluralité de zones élémentaires, ou pixels ($P_{ij}$), affectées chacune d'une valeur numérique ($L_{ij}$) représentative de l'intensité du rayonnement infrarouge émis par la partie de l'élément solide (3) correspondant à ce pixel,

- des moyens de traitement des images (12) aptes à produire une image numérique, chaque pixel ($P_{ij}$) constituant cette image numérique étant affecté d'une valeur numérique résultat ($L'_{ij}$) égale à la différence entre la valeur numérique ($L_{ij}$) associée à ce pixel ($P_{ij}$) en fin d'une série de sollicitations et la valeur numérique ($L_{rij}$) affectée à ce même pixel ($P_{ij}$) en début de cette série de sollicitations.
- des moyens de représentation de chacune des valeurs numériques résultat ($L'_{ij}$) associée à chacun des pixels, de façon à constituer une image représentative de la variation de température ($\Delta T$) subie par au moins ladite zone (11) de l'élément solide (3) au cours des sollicitations.

9.- Dispositif suivant la revendication 8 caractérisé en ce qu'il comporte des moyens de représentation de la variation de température ($\Delta T$) subie par ladite zone (11) de l'élément solide (3), en fonction des différentes contraintes correspondant respectivement aux différentes séries de sollicitations subies par l'élément solide (3).

FIG. 1

FIG. 2

FIG. 3

FIG.4

FIG.5

Office européen    **RAPPORT DE RECHERCHE EUROPEENNE**

des brevets

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DATABASE WPIL<br>Section EI, Week 9008, Février 1990<br>Derwent Publications Ltd., London, GB;<br>Class S03, AN 90-057422/08<br>& SU-A-1 499 167 (NOVOS ELECTROTECH INST)<br>7 Août 1989 | 1,3,6,7 | G01N3/32<br>G01L1/24 |
| Y | * abrégé *<br><br>* colonne 4, ligne 50; figures 2,3 *<br>--- | 2,4,5,8,9 | |
| Y | US-A-4 541 059 (KABUSHIKI KAISHA KOMATSU SEISAKUSHO)<br>* colonne 3, ligne 34 – colonne 7, ligne 6; figure 2 *<br>--- | 2,4,5,8,9 | |
| A | PATENT ABSTRACTS OF JAPAN<br>vol. 10, no. 173 (P-469)18 Juin 1986<br>& JP-A-61 023 941 ( NIPPON DENSHI KK ) 1 Février 1986<br>* abrégé *<br>--- | 1-9 | |
| A | PATENT ABSTRACTS OF JAPAN<br>vol. 10, no. 195 (P-475)9 Juillet 1986<br>& JP-A-61 038 442 ( JEOL LTD ) 24 Février 1986<br>* abrégé *<br>--- | 1-9 | **DOMAINES TECHNIQUES RECHERCHES (Int. Cl.5)**<br><br>G01N<br>G01L |
| A | PATENT ABSTRACTS OF JAPAN<br>vol. 12, no. 456 (P-793)30 Novembre 1988<br>& JP-A-63 179 230 ( NIPPON STEEL CORP ) 23 Juillet 1988<br>* abrégé *<br>--- | 1-9 | |
| A | PATENT ABSTRACTS OF JAPAN<br>vol. 10, no. 68 (P-437)(2125) 18 Mars 1986<br>& JP-A-60 209 132 ( NIPPON DENSHI KK ) 21 Octobre 1985<br>* abrégé *<br>---<br>-/-- | 1-9 | |

Le présent rapport a été établi pour toutes les revendications

| Lieu de la recherche | Date d'achèvement de la recherche | Examinateur |
|---|---|---|
| LA HAYE | 01 OCTOBRE 1993 | BINDON C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P0402)

EP 0 577 512 A1

**Office européen
des brevets**

**RAPPORT DE RECHERCHE EUROPEENNE**

Numero de la demande

EP    93 40 1700
Page 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | WO-A-7 901 156 (SIRA INSTITUTE LTD) <br> * page 5, ligne 36 - page 12, ligne 17 * <br><br> ----- | 1-9 | |
| | | | **DOMAINES TECHNIQUES RECHERCHES (Int. Cl.5 )** |

Le présent rapport a été établi pour toutes les revendications

| Lieu de la recherche | Date d'achèvement de la recherche | Examinateur |
|---|---|---|
| LA HAYE | 01 OCTOBRE 1993 | BINDON C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................
& : membre de la même famille, document correspondant

EPO FORM 1503 03.82 (P0402)

11